# EUROPÄISCHE PATENTANMELDUNG

(11) **EP 3 626 685 A2**
(43) Veröffentlichungstag der Anmeldung: **25.03.2020**
(21) Anmeldenummer: 19197286.8
(22) Anmeldetag: 13.09.2019
(51) Int. Cl.: C02F 9/00, C02F 1/44, C02F 1/66, C02F 1/68, C02F 103/20

(54) **SYSTEM ZUM BEHANDELN VON HARN**

(30) Priorität: 19.09.2018 DE 102018123081
(71) Anmelder: Döhler, Helmut Georg, 96190 Untermerzbach (DE)
(72) Erfinder: Döhler, Helmut Georg, 96190 Untermerzbach (DE)
(74) Vertreter: Lichtnecker, Markus Christoph

(57) **Zusammenfassung**

Die Erfindung betrifft ein System zum Behandeln von Harn, umfassend eine Trennvorrichtung zum Trennen von Harn und Kot von Tieren, eine Stabilisierungsvorrichtung zur Stabilisierung des Harns, und eine Weiterbehandlungsvorrichtung zum Aufkonzentrieren des Harns und/oder Ausfällen von Düngersalzen.

## Beschreibung

Die Erfindung betrifft ein System und ein Verfahren zum Behandeln von Harn sowie eine Trennvorrichtung zum Trennen von Harn und Kot von Tieren.

Bei der Tierhaltung, z.B. Schweine-, Rinder- oder Pferdehaltung, treten große Mengen an Harn, also Urin, und Kot auf. Harn und Kot sowie gegebenenfalls Futter- und/oder Einstreureste vermischen sich zu Gülle. Dabei treten hohe Ammoniak-, Methan- und Lachgasemissionen auf.

Durch das sich im Kot befindliche Enzym Urease wird in der Gülle der mit dem Urin ausgeschiedene Harnstoff hydrolysiert und in Kohlendioxid und Wasser umgewandelt. Durch die Urease steigt der pH-Wert insbesondere bis auf ca. 8 bis 9. Ammoniak bzw. CO₂ gast dabei aus.

Die Methanemissionen im Stall und im Lager entstehen insbesondere durch den weitgehend anaeroben Abbau der im Kot vorhandenen organischen Substanzen. Dies hat unangenehme Faulgerüche zur Folge, die über die Abluft in die Umgebungen emittiert werden.

Die entstehenden Emissionen sind ferner schädlich für die Umwelt und das Klima.

Es ist daher eine Aufgabe der Erfindung, ein System, eine Trennvorrichtung sowie ein Verfahren zum Behandeln von Harn zu schaffen, bei dem/der die Emissionen gering gehalten werden, wobei insbesondere weder Stallmist noch Gülle entstehen.

Die Lösung dieser Aufgabe erfolgt durch die Gegenstände sowie das Verfahren der unabhängigen Ansprüche.

Erfindungsgemäß umfasst das System zum Behandeln von Harn eine Trennvorrichtung zum Trennen von Harn und Kot von Tieren.

Durch die Trennvorrichtung kann verhindert werden, dass sich Harn und Kot zu Gülle vermischen. Die jeweiligen Fraktionen von Harn und Kot können vorzugsweise unmittelbar aus dem Stall entfernt werden.

Durch die Verhinderung der Durchmischung von Kot und Harn werden neben der Ammoniakemission auch Geruchs-, Methan- und Lachgasemissionen reduziert.

Das System weist eine Stabilisierungsvorrichtung zur Stabilisierung des Harns auf. Vorzugseise wird der Harn unmittelbar im Stall stabilisiert, so dass die Harnstoffhydrolyse unterbunden oder reduziert wird, die Bildung von Ammonium bzw. Ammoniak im Stall verhindert wird und/oder entstehendes Ammonium bzw. Ammoniak bereits im Stall neutralisiert und damit vor Ausgasung geschützt wird. Dies ist beispielsweise wichtig, da reiner Harn schneller als Gülle ausgast, da die Gülle eine gewisse Puffer-Funktionalität aufweist.

Insbesondere die Urease wird in der Stabilisierungsvorrichtung, vorzugsweise vorübergehend, blockiert. Dazu kann beispielsweise ein Stabilisierungsmittel zugesetzt werden.

Zur Stabilisierung kann dem Harn z.B. Kalk zugegeben werden. Der Kalk ist insbesondere hochreaktiv. Beispielsweise kann es sich um Branntkalk und/oder Kalkhydrat handeln.

Alternativ oder zusätzlich kann der Harn durch Zugabe von Aluminiumsulfat stabilisiert werden. Aluminiumsulfat bildet im Harn Schwefelsäure, die den pH-Wert absenkt.

Alternativ oder zusätzlich kann der Harn durch Zugabe von Säure, z.B. Schwefelsäure, stabilisiert werden. Die Säure ist insbesondere scharf bzw. konzentriert. Die Bakterien können dadurch blockiert werden, sodass eine Umwandlung in Ammoniak unterbunden wird.

Auch biologische und/oder synthetische Bakterien- bzw. Ureasehemmer sind denkbar.

Die Emissionen werden durch das erfindungsgemäße System gering gehalten.

So kann durch die Trennvorrichtung sowie die Stabilisierungsvorrichtung insbesondere eine Minderung der Ammoniakemissionen um etwa 70%, der Methanemissionen um etwa 90% und der Geruchsemissionen um etwa 50% erreicht werden. Derartige Emissionsreduktionen können bisher lediglich mit aufwändigen Abluftreinigungsanlagen erreicht werden. Es war überraschend, dass diese Werte auch bei einer Kombination aus physischer Trennung von Harn und Kot sowie einer chemisch-technischen Behandlung des Harns erreicht werden kann.

Das System weist eine Weiterbehandlungsvorrichtung zum Aufkonzentrieren des Harns und/oder zum Ausfällen von Düngersalzen auf.

Der Harn kann insbesondere aufkonzentriert, also z.B. eingedickt, werden. Je nach Verfahren kann auf diese Weise z.B. ein flüssiger Wirtschaftsdünger mit ca. 25 kg Stickstoff pro Tonne entstehen. Dies ist etwa die vierfache Menge im Vergleich zu Gülle. Der Harn kann z.B. zu einem Stickstoff-Kalium (NK) Dünger aufkonzentriert werden.

Durch die Aufkonzentration müssen keine großen Massen an Harn auf das Feld ausgetragen werden.

Alternativ oder zusätzlich können Düngersalze, insbesondere wertgebende Nährstoffe, ausgefällt werden. Auch können insbesondere Düngerkristalle kristallisieren. Das Ausfällen kann vor, nach oder anstatt der Aufkonzentration erfolgen.

Beim Ausfällen kann insbesondere der pH-Wert geändert werden. Dazu können z.B. Reagenzien zugesetzt werden.

Beispielsweise können eine Säure, eine Lauge und/oder Kristalle zugesetzt werden. Möglich sind z.B. Schwefelsäure, Phosphorsäure, Salze, insbesondere Eisensalze, Kristalle, insbesondere Eisenkristalle, Magnesiumchlorid und/oder Kalkhydrat.

Zumindest ein Teil der im Harn enthaltenen Nährstoffe wird chemisch gefällt, beispielsweise Stickstoff (N), Kalium (K), Calcium (Ca), Magnesium (Mg) bzw. Phosphat (P), und zu Düngerprodukten weiterverarbeitet.

Wird z.B. Säure als Stabilisator genutzt, so wird durch die Säure die Löslichkeit des Phosphors erhöht, insbesondere durch eine Anhebung des pH-Werts auf ein neutrales Niveau. Durch die Zugabe von Magnesiumchlorid wird z.B. das Düngerkristall Struvit gebildet, mit N, P und Mg als Inhaltstoffen.

Wird z.B. Kalkhydrat als Stabilisator eingesetzt, so wird die Fällung von Ca-, Mg-, und/oder K-Phosphaten oder Apatiten ausgelöst. Hierzu kann der pH-Wert insbesondere auf ca. 9 durch die Zugabe von Säure gesenkt werden.

Beispielsweise kann durch die Zugabe von Eisensalzen in sauer stabilisiertem Harn die Fällung des schwer fällbaren K als Jarosit induziert werden.

Bei dauerhafter Stabilisierung des Harnstoffs, also insbesondere bei Abwesenheit von Ammonium-Ionen, kann z.B. durch eine Einstellung des pH-Wertes auf ein neutrales Niveau auch Kalium-Struvit gefällt werden.

Als Ergebnis entstehen insbesondere Düngersalze bzw. Düngerkristalle und eine konzentrierte Düngerflüssigkeit, die mit hoher N-Ausnutzung und/oder erheblich besserer Schlagkraft eingesetzt werden kann. So kann z.B. statt 20 m³/ha nur noch 4 m³/ha oder 5 m³/ha ausgebracht werden.

Die hohe Ausnutzung wird insbesondere durch die Trennung des Harnstoff N vom organisch gebundenen N hervorgerufen. Der entstehende Dünger besteht somit vorzugsweise lediglich aus mineralischem Stickstoff. Ausbringungs-Engpässe im Frühjahr können so vollständig bzw. nahezu vollständig vermieden werden.

Die Erfindung betrifft auch die Verwendung des Systems zur Herstellung eines Düngers. Durch das System erhält man am Ende vorzugsweise einen konzentrierten Dünger und/oder Düngergrundstoffe.

Das System eignet sich z.B. sowohl für landwirtschaftliche Betriebe mit ausreichenden Verwertungsflächen, als auch für Überschussbetriebe. Für Überschussbetriebe ist das System gut geeignet, da mit Behandlungsverfahren die Problemnährstoffe Phosphat (P) sowie organisch gebundener Stickstoff (N) zu mindestens 90 % exportiert werden können.

Das System ist insbesondere als Komplettsystem ausgebildet. Die Trennvorrichtung, die Stabilisierungsvorrichtung und die Weiterbehandlungsvorrichtung schließen sich vorzugsweise aneinander an bzw. sind miteinander verbunden. Beispielsweise können Fördervorrichtungen, vorzugsweise Leitungen, Förderbänder, Föderschieber und/oder Förderschnecken, vorgesehen sein, welche den Harn von der Trennvorrichtung zur Stabilisierungsvorrichtung und/oder von der Stabilisierungsvorrichtung zur Weiterbehandlungsvorrichtung transportieren.

Es war überraschend, dass am selben Ort, an dem Harn und Kot entstehen, eine Stabilisierung und Weiterbehandlung des Harns erfolgen kann, sodass unmittelbar ein Düngemittel entsteht. Auch werden im gesamten System die Emissionen gering gehalten.

Insbesondere kann das System eine Stabilisierungseinheit, z.B. mit einer Rückspülvorrichtung und/oder einer Sprühvorrichtung, umfassen. Über die Stabilisierungseinheit kann stabilisierter Urin rückgeführt werden, um den Harn bereits in der Trennvorrichtung zu stabilisieren und/oder den Harn schnell aus dem Stall zu spülen.

Das Komplettsystem verursacht einen ähnlichen Investitionsbedarf wie bisherige Anlagen. So fallen keine Investitionen für Güllekanäle und/oder Güllebehälter an.

Weiterbildungen der Erfindung sind auch den abhängigen Ansprüchen, der Beschreibung sowie den beigefügten Zeichnungen zu entnehmen.

Gemäß einer Ausführungsform umfasst die Weiterbehandlungsvorrichtung eine Umkehrosmose-Vorrichtung. Durch diese Membrantechnik kann der Harn aufkonzentriert werden. Beispielsweise kann es sich um eine Vibrations-Umkehrosmose-Vorrichtung handeln. Die Weiterbehandlungsvorrichtung kann im Bereich des Stalls oder aber extern angeordnet sein. Bei einer externen Anordnung wird der Harn zunächst zur Weiterbehandlungsvorrichtung gebracht, z.B. mittels Leitungen und/oder Fahrzeugen.

Die Umkehrosmose-Vorrichtung ist insbesondere schlammverträglich. Vorzugsweise wird der Harn außerhalb des Stalls über eine Trenn- und/oder Siebeinrichtung von groben Partikeln befreit, ehe dieser der Umkehrosmose-Vorrichtung zugeführt wird.

Durch die Umkehrosmose-Vorrichtung erhält man insbesondere etwa 25 % Konzentrat und 75 % Permeat, welches sauberem Wasser - weitgehend ohne Mineralstoffen - entspricht. Dieses Wasser kann z.B. in die Vorflut eingeleitet werden.

Das flüssige Konzentrat kann vorzugsweise eine etwas drei- bis fünffach höhere Nährstoffkonzentration als Rohurin aufweisen. Insbesondere weisen die Salze erheblich höherer Konzentrationen auf.

Das Konzentrat kann dann beispielsweise als konzentrierter Flüssigdünger auf Felder und Wiesen ausgebracht werden. Dieser konzentrierte Dünger ist genauso düngungswirksam wie synthetische N-Dünger, verursacht aber bei der Ausbringung und Lagerung erheblich geringere Kosten als herkömmliche Gülle, Mist und/oder Jauche.

Vorzugsweise wird das Konzentrat jedoch weiterbehandelt, indem Fällungsreaktionen induziert werden. Mit diesen Fällungsreaktionen werden insbesondere die Nährstoffe N, P, K sowie Mg und Ca gefällt, um Düngersalze und/oder Düngerkristalle zu erhalten.

Anstelle oder zusätzlich zu den Fällungsreaktionen können die Nährelemente auch beispielsweise durch Sorptionsprozesse aus dem Urin-Konzentrat entfernt werden. Hierfür eigenen sich z.B. Zeolite, Bentonite und/oder Austauscherharze.

Alternativ oder zusätzlich kann der, insbesondere aufkonzentrierte, Harn durch Strippungsprozesse von Ammonium befreit werden. Als Produkt entsteht dabei z.B. handelsfähiges Ammoniakwasser und/oder Ammoniumsulfat.

Nach einer weiteren Ausführungsform ist der Weiterbehandlungsvorrichtung eine Destabilisierungsvorrichtung zur Destabilisierung des Harns vorgeschalten. So kann insbesondere die Stabilisierung des Harns unter kontrollierten Bedingungen rückgängig gemacht werden. So kann die Blockierung der Urease vorzugsweise wieder gelöst werden.

Die Blockierung kann z.B. über einen Zeitraum von mindestens 10 Min., 15 Min., 20 Min., 25 Min., 30 Min., 35 Min., 40 Min., 45 Min., 50 Min., 55 Min. oder 60 Min. erfolgen. Auch mehrere Stunden bzw. Tage sind denkbar. In der Destabilisierungsvorrichtung kann sich die Blockierung durch Warten gegebenenfalls von selbst wieder lösen. Es kann jedoch auch der pH-Wert neutralisiert werden. Hierzu kann z.B. Kalk und/oder Säure zugegeben werden.

Die Destabilisierung kann insbesondere im selben Behälter wie die Stabilisierung erfolgen. Alternativ handelt es sich bei der Stabilisierungsvorrichtung und der Destabilisierungsvorrichtung um zwei separate Vorrichtungen.

Der Harn wird somit vorzugsweise wieder destabilisiert, ehe dieser weiterbehandelt wird. Auch kann z.B. eine technische Trennung erfolgen, um für technische Anwendungen, z.B. als Reduktionsmittel, zur Verfügung zu stehen.

Alternativ kann auch die Chemie des stabilisierten Harns unmittelbar geändert werden, z.B. indem der pH-Wert geändert wird, Reagenzien zugesetzt und Nähstoffe ausgefällt werden, um (Gülle)salze zu erhalten.

Die Erfindung betrifft auch eine Trennvorrichtung zum Trennen von Harn und Kot von Tieren. Bereits durch die Trennung von Harn und Kot können die Emissionen verringert werden.

Die Trennvorrichtung umfasst eine Schiebevorrichtung mit wenigstens einer, vorzugsweise zwei, Schaufeln. An der Schaufel kann insbesondere eine Kunststoff-Lippe, z.B. Gummi-Lippe, angeordnet sein.

Die Schiebevorrichtung kann insbesondere in einem Unterflurbereich angeordnet sein. Insbesondere kann die Schiebevorrichtung seitliche Führungen umfassen.

Durch die Schaufel werden der Harn und der Kot effizient voneinander getrennt. Der Harn kann z.B. frei in eine, vorzugsweise zentrale, Urinrinne ablaufen.

Die Trennvorrichtung weist eine Antriebsvorrichtung zum Antreiben der Schiebevorrichtung auf. Die Antriebsvorrichtung kann insbesondere einen oder mehrere Seilzüge umfassen. Die Schiebevorrichtung kann dadurch vor und/oder zurück bewegt werden.

Beispielsweise kann die Schiebevorrichtung in einem zentral geneigten, z.B. V-förmigen, Kanal bewegt werden. Die Kanalfläche kann z.B. ein Gefälle zwischen 2° und 20°, vorzugsweise von 10°, aufweisen. Der Harn kann an den Kanalflächen in eine mittige Urinrinne fließen.

Die Grundfläche des Kanals kann insbesondere mit einem reibungserniedrigenden Material, z.B. Epoxidharz, überzogen sein. Dadurch kann eine schnelle Dränung des Harns zur Rinne erfolgen. Die Schaufeln können, z.B. auch wegen der Kunststoff-Lippen, die Flächen des Kanals sauber ausräumen.

Die Trennvorrichtung weist eine, insbesondere elektrisch angetriebene, Vibrationsvorrichtung zum Vibrieren der Schaufel(n) auf. Die Schiebevorrichtung kann zur Stromversorgung insbesondere einen Akkumulator für die Vibrationsvorrichtung aufweisen.

Durch die Vibrationen wird der Kot in außenliegende Bereiche der Schaufeln verlagert und von der mittigen Urinrinne abgehalten. Dadurch wird eine Durchmischung von Kot und Harn bereits im Stall verhindert. Stabilisierungsmittel zum Stabilisieren des Harns können daher eingespart werden.

Der Kot wird abgesammelt, sodass insbesondere eine weitgehende Unterflurseparierung von Kot und Harn erfolgt.

Die Fraktionen Harn und Kot können vorzugsweise außerhalb des Stalls getrennt erfasst werden.

Der Kot kann über die Schiebevorrichtung bzw. eine Förderschecke vom Mistbereich zu einem Wechselcontainer transportiert werden. Über eine mechanische Trenneinrichtung, z.B. ein Bogensieb, können z.B. Restflüssigkeiten aus dem mit der Schiebevorrichtung ausgeräumten Kot abgetrennt werden. Der dabei gewonnene Harn kann der Harnverarbeitungskaskade zugeführt werden.

Der Kot kann insbesondere als Substrat für eine Biogasanlage dienen. Dadurch wird auch die Vergärung von z.B. Schweineexkrementen wirtschaftlich sinnvoll. So ist Schweinegülle als Gärsubstrat bisher in der Regel aufgrund des niedrigen Gehalts an organischer Substanz kaum wirtschaftlich einsetzbar. Die Methanemissionen in die Atmosphäre werden so weitestgehend vermieden und kontrolliert im Biogassystem genutzt.

Die Trennvorrichtung kann vorzugsweise im erfindungsgemäßen System zum Behandeln von Harn eingesetzt werden.

Gemäß einer Ausführungsform ist eine Ladestation zum Laden eines Akkumulators der Vibrationsvorrichtung vorgesehen. Wird die Schiebevorrichtung nicht zum Trennen von Harn und Kot benötigt, kann diese, insbesondere automatisch, in eine Ladeposition verfahren werden. In der Ladeposition kann der Akkumulator der Vibrationsvorrichtung aufgeladen werden.

Nach einer weiteren Ausführungsform ist die Schaufel bzw. sind die Schaufeln in einem oberen Bereich in Bewegungsrichtung nach hinten versetzt, insbesondere nach hinten geneigt. Die Schaufel ist quasi schräg geneigt, sodass der Kot wie mit einem Pflug nach außen bewegt wird.

Gemäß einer weiteren Ausführungsform sind zwei Schaufeln vorgesehen, die insbesondere V-förmig angeordnet sind. Es ergibt sich somit eine Schiebespitze. Der Kot wird dabei zu beiden Seiten abgelenkt. Die Schiebespitze ist insbesondere im Bereich der mittigen Urinrinne angeordnet.

Nach einer weiteren Ausführungsform ist eine Stabilisierungseinheit, insbesondere mit einer Spülvorrichtung und/oder einer Sprühvorrichtung, z.B. Sprühdüse, zum Einbringen einer Stabilisierungsflüssigkeit vorgesehen.

Die Stabilisierungseinheit kann beispielsweise eine oder mehrere Spülleitungen und/oder eine oder mehrere Spüldüsen umfassen. Die Spülleitung kann insbesondere seitlich am oder im Kanal angeordnet sein.

Über die Stabilisierungseinheit kann die Stabilisierungsflüssigkeit dem Kanal der Trennvorrichtung und/oder der Unterseite der Spaltenböden zugeführt werden.

Auch kann die Stabilisierungsflüssigkeit auf die Schaufeln sowie die Roste aufgetragen werden. Beispielsweise kann die Stabilisierungsflüssigkeit mittels Sprühdüsen, z.B. von unten, eingesprüht werden.

Durch die Befeuchtung werden mit der Schiebevorrichtung bessere Räumungsergebnisse erzielt als bei getrocknetem Kot.

Bei der Stabilisierungsflüssigkeit kann es sich vorzugsweise um eine Flüssigkeit handeln, welche Stabilisierungsmittel aufweist, die auch bei der Stabilisierungsvorrichtung verwendet werden.

Beispielsweise kann es sich bei der Stabilisierungsflüssigkeit um Kalkmilch, also gelöstes Kalkhydrat, um Schwefelsäure und/oder um Phosphoramide handeln.

Ferner ist die Stabilisierung über die Nitrifikation von Ammonium möglich. Das Mischen mit Chemikalien bzw. die biologische Behandlung erfolgt vorzugsweise außerhalb des Stalls in einem dafür vorgesehenen Reaktor. Dabei können die Chemikalien für Personal und Tiere gefahrlos gelagert und insbesondere vollautomatisch hinzudosiert werden. Vorzugsweise werden nur solche Chemikalien eingesetzt, die auch einen agronomischen Mehrwert als Dünger bringen. Hierbei sind insbesondere Kalkprodukte zu nennen.

Die Stabilisierungsflüssigkeit blockiert das Enzym Urease, welches den im Urin enthaltenen Harnstoff in Ammoniak umwandelt und die Ursache für Ammoniakemissionen ist.

Alternativ kann auch ein in der Stabilisierungsvorrichtung stabilisierter Harn als Stabilisierungsflüssigkeit verwendet werden. Dabei kann der Harn insbesondere von Festoffen getrennt und weiter stabilisiert werden. Der stabilisierte Harn kann dann in den Kanal rückgespült werden. Die Stabilisierungseinheit umfasst hierzu eine Rückspülvorrichtung und/oder eine Sprühvorrichtung.

Vorzugsweise wird der mittige Urinkanal durch die Rückspülvorrichtung regelmäßig mit Stabilisierungsflüssigkeit gespült. Die Bildung von Staubereichen, beispielsweise verursacht durch Kot, kann dadurch verhindert und ein freies Ablaufen des Harns ermöglicht werden.

Durch die Stabilisierungsflüssigkeit wird der Harn bereits im Stall stabilisiert. Die Emissionen können weitgehend bereits an der Quelle reduziert werden.

Die Stabilisierungsmittel werden vorzugsweise nur in der Menge zugesetzt, dass die Ureaseblockade reversibel ist. Die bakterielle Umwandlung des Harnstoffs in Ammonium kann somit vorzugsweise außerhalb des Stalls von statten gehen.

Die Erfindung betrifft auch Verfahren zum Behandeln von Harn, vorzugsweise mit einem erfindungsgemäßen System, bei dem Harn und Kot von Tieren getrennt werden.

Die Trennung kann insbesondere mit einer erfindungsgemäßen Trennvorrichtung erfolgen.

Der Harn wird stabilisiert, aufkonzentriert und/oder es werden Düngersalze ausgefällt.

Vorzugsweise kann zumindest ein Teil des stabilisierten Harns in die Trennvorrichtung rückgeführt werden.

Gemäß einer Ausführungsform wird der Harn vor dem Aufkonzentrieren und/oder dem Ausfällen der Düngersalze destabilisiert.

Dabei kann der stabilisiere Harn z.B. über einen Zeitraum von mindestens 10 Min., 15 Min., 20 Min., 25 Min., 30 Min., 35 Min., 40 Min., 45 Min., 50 Min., 55 Min., 60 Min., mehreren Stunden oder Tagen bzw. maximal einen Tag, 20 h, 15 h, 10 h, 5 h, 2 h, 1,5 h oder 1 h stehen gelassen werden. Auch kann z.B. Kalk und/oder Säure zugegeben werden.

Ist die Blockierung gelöst, kann z.B. eine Weiterbehandlung erfolgen.

Die Erfindung betrifft auch ein Verfahren zum Behandeln von Harn, bei dem Harn und Kot von Tieren getrennt werden, der Harn stabilisiert wird, und der stabilisierte Harn, insbesondere mittels einer Stabilisierungseinheit, rückgeführt wird.

Schließlich betrifft die Erfindung ein System zum Behandeln von Harn, umfassend eine Trennvorrichtung zum Trennen von Harn und Kot von Tieren, eine Stabilisierungsvorrichtung zur Stabilisierung des Harns, und eine Stabilisierungseinheit, insbesondere mit einer Spülvorrichtung und/oder einer Sprühvorrichtung, zum Einbringen des stabilisierten Harns in die Trennvorrichtung, insbesondere den Kanal.

Der stabilisierte Harn kann somit in die Trennvorrichtung rückgeführt werden.

Alle hier beschriebenen Ausführungsformen und Bauteile der Vorrichtungen sind insbesondere dazu ausgebildet, nach den hier beschriebenen Verfahren betrieben zu werden. Ferner können alle hier beschriebenen Ausführungsformen der Vorrichtungen sowie alle hier beschriebenen Ausführungsformen der Verfahren jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Darstellung einer Ausführungsform eines erfindungsgemäßen Systems,
- Fig. 2: eine Schnittansicht einer Ausführungsform einer erfindungsgemäßen Trennvorrichtung,
- Fig. 3: eine Draufsicht der Trennvorrichtung gemäß Fig. 2,
- Fig. 4: eine Draufsicht einer Ausführungsform eines erfindungsgemäßen Systems, und
- Fig. 5: eine Seitenansicht des Systems gemäß Fig. 4.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

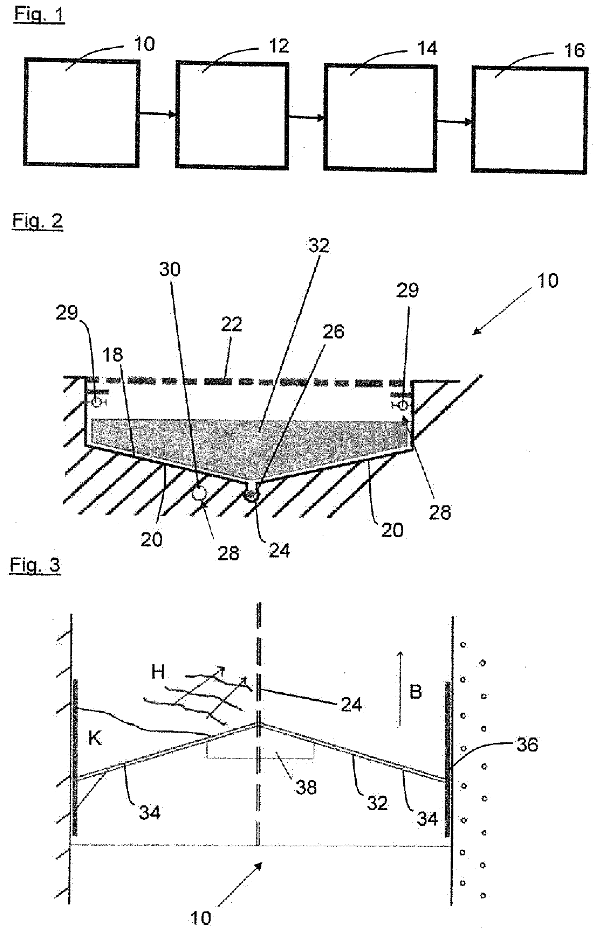

Fig. 1 zeigt ein System zum Behandeln von Harn mit einer Trennvorrichtung 10 zum Trennen von Harn und Kot von Tieren, insbesondere Schweinen.

Der separierte Harn wird in eine Stabilisierungsvorrichtung 12 zur Stabilisierung des Harns geleitet. Hierbei wird die Urease blockiert. Im Stall bzw. in der unmittelbaren Umgebung des Stalls werden die Emissionen somit gering gehalten.

Der stabilisierte Harn wird in einer optionalen Destabilisierungsvorrichtung 14 unter kontrollierten Bedingungen destabilisiert, d.h. die Blockierung wird wieder gelöst.

Der Harn kann nun einer Weiterbehandlungsvorrichtung 16 zum Aufkonzentrieren des Harns und/oder Ausfällen von Düngersalzen zugeführt werden.

Die Weiterbehandlungsvorrichtung 16 kann beispielsweise eine Umkehrosmose-Vorrichtung umfassen.

Fig. 2 zeigt eine Trennvorrichtung 10 mit einem Kanal 18 mit schräg verlaufenden Kanalflächen 20. Die Kanalflächen 20 sind insbesondere glatt und können z.B. mit Epoxidharz beschichtet sein.

Der Kanal 18 ist beispielsweise mit einem Rost 22 abgedeckt. Der Rost 22 kann insbesondere als perforiertes Kunststoffelement ausgebildet sein. Die Exkremente können durch den Rost 22 in den Kanal 18 fallen.

Der Abstand vom Rost 22 bis zur Oberkante der schräg verlaufenden Kanalflächen 20 kann z.B. zwischen 0,1 m und 1 m, vorzugsweise 0,2 m, betragen. Die Breite des Kanals 18 kann insbesondere zwischen 1 m und 5 m, vorzugsweise zwischen 2,5 m und 3,5 m betragen.

Mittig im Kanal 18 ist eine Urinrinne 24 vorgesehen, in der Harn über die geneigten Kanalflächen 20 abläuft.

In der Urinrinne 24 kann optional ein Räumkolben 26 vorgesehen sein.

Die Trennvorrichtung 10 umfasst eine Stabilisierungseinheit 28 mit mehreren als Spüldüsen 29 ausgebildete Sprühvorrichtungen, über die Stabilisierungsflüssigkeit eingebracht werden kann.

Über eine als Rückspülleitung 30 ausgebildete Rückspülvorrichtung kann beispielsweise in der Stabilisierungsvorrichtung 12 stabilisierter Harn wieder in die Trennvorrichtung 10 rückgeführt werden und z.B. die Urinrinne 24 gespült werden. Der Harn kann dadurch insbesondere schnell und zumindest nahezu vollständig aus dem Stall geführt werden.

Durch die Stabilisierungsflüssigkeit wird die Urease zumindest teilweise bereits im Stall blockiert.

Die Trennvorrichtung 10 umfasst eine Schiebevorrichtung 32.

Wie in Fig. 3 zu sehen ist, weist die Schiebevorrichtung 32 zwei V-förmig angeordnete Schaufeln 34 auf.

Über eine z.B. als Seilzug 36 ausgebildete Antriebsvorrichtung kann die Schiebevorrichtung 32 in Bewegungsrichtung B vor bzw. entgegengesetzt zurück bewegt werden.

An der Schiebevorrichtung 32 ist eine Vibrationsvorrichtung 38 angeordnet, welche die Schaufeln 34 in Vibration versetzen kann.

Durch die Vibrationen sammelt sich der Kot K an den Seiten, wie beispielhaft auf der linken Seite dargestellt ist, während der Harn H zur zentralen Urinrinne 24 fließt.

Harn und Kot werden auf diese Weise voneinander getrennt.

Die Schaufeln 34 können schräg nach hinten geneigt sein, sodass der Kot zu den Seiten hin bewegt. Der Zwischenraum zwischen den Schaufeln 34 und der Wandung des Kanals 18 wird mit Kot gefüllt, was den Abtransport des Harns begünstigt.

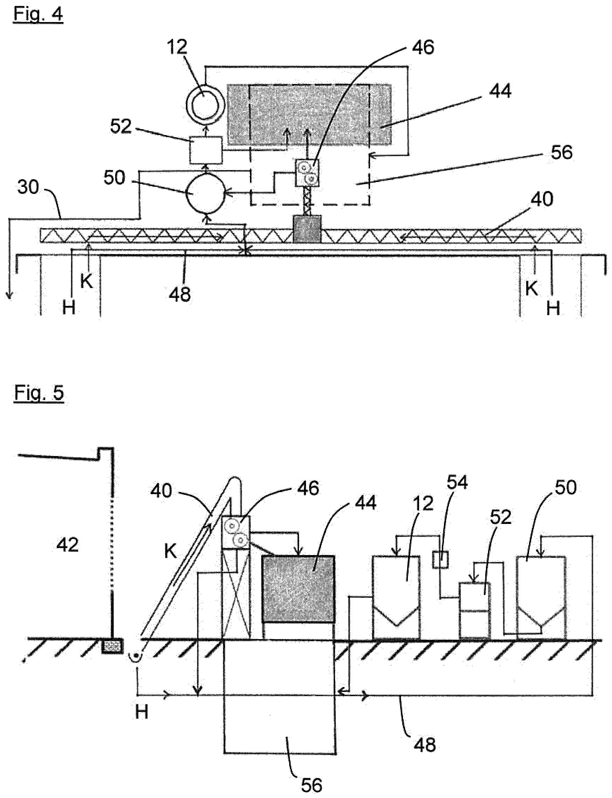

In den Fig. 4 und 5 ist beispielhaft ein erfindungsgemäßes System dargestellt. Eine Weiterbehandlungsvorrichtung sowie eine optionale Destabilisierungsvorrichtung sind hier nicht gezeigt. Auch kann die Anordnung abhängig von der Logistik bzw. dem Standort variieren.

Kot K kann über eine Trogschnecke 40 aus dem Stall 42 in einen Wechselcontainer 44 gefördert werden. Der Wechselcontainer 44 kann beispielsweise ein Volumen zwischen 10 m³ und 50 m³, vorzugsweise von 25 m³, aufweisen.

Dem Wechselcontainer 44 kann insbesondere eine mechanische Entwässerungsvorrichtung, z.B. ein Entwässerungssieb 46, vorgeschalten sein, in dem Harnreste vom Kot getrennt werden.

Harn H kann über eine Harnleitung 48 einem Zulaufbehälter 50 zugeführt werden. Das Fassungsvermögen des Zulaufbehälters 50 kann z.B. zwischen 1 m³ und 10 m³, vorzugsweise 5 m³, betragen. Je nach Anwendung sind auch deutlich größere oder kleinere Fassungsvermögen denkbar.

In einem Schwingsieb 52 können Kotreste entfernt und z.B. dem Wechselcontainer 44 zugeführt werden.

Anschließend kann der Harn einer optionalen Dosierungsvorrichtung 54 zugeführt werden.

In der Stabilisierungsvorrichtung 12 kann der Harn nun stabilisiert werden. Das Fassungsvermögen der Stabilisierungsvorrichtung 12 kann z.B. zwischen 1 m³ und 10 m³, vorzugsweise 5 m³, betragen.

Der stabilisierte Harn kann anschließend einem Urinlager 56 zugeführt werden. Das Urinlager 56 kann insbesondere als Unterflur-Lager ausgebildet sein.

Das Fassungsvermögen des Urinlagers 56 kann z.B. zwischen 10 m³ und 100 m³, vorzugsweise 50 m³, betragen.

Über eine Rückspülleitung 30 kann zumindest ein Teil des stabilisierten Harns wieder zurückgeleitet werden.

### Bezugszeichenliste

- 10: Trennvorrichtung
- 12: Stabilisierungsvorrichtung
- 14: Destabilisierungsvorrichtung
- 16: Weiterbehandlungsvorrichtung, Umkehrosmose-Vorrichtung
- 18: Kanal
- 20: Kanalfläche
- 22: Rost
- 24: Urinrinne
- 26: Räumkolben
- 28: Stabilisierungseinheit
- 29: Spüldüse, Sprühvorrichtung
- 30: Rückspülleitung, Rückspülvorrichtung
- 32: Schiebevorrichtung
- 34: Schaufel
- 36: Seilzug, Antriebsvorrichtung
- 38: Vibrationsvorrichtung
- 40: Trogschnecke
- 42: Stall
- 44: Wechselcontainer
- 46: Entwässerungssieb
- 48: Harnleitung
- 50: Zulaufbehälter
- 52: Schwingsieb
- 54: Dosierungsvorrichtung
- 56: Urinlager

- B: Bewegungsrichtung
- K: Kot
- H: Harn

## Patentansprüche

1. System zum Behandeln von Harn, umfassend
eine Trennvorrichtung (10) zum Trennen von Harn und Kot von Tieren,
eine Stabilisierungsvorrichtung (12) zur Stabilisierung des Harns, und
eine Weiterbehandlungsvorrichtung (16) zum Aufkonzentrieren des Harns und/oder Ausfällen von Düngersalzen.

2. System nach Anspruch 1,
**dadurch gekennzeichnet,**
**dass** die Weiterbehandlungsvorrichtung (16) eine Umkehrosmose-Vorrichtung umfasst.

3. System nach Anspruch 1 oder 2,
**dadurch gekennzeichnet,**
**dass** der Weiterbehandlungsvorrichtung (16) eine Destabilisierungsvorrichtung (14) zur Destabilisierung des Harns vorgeschalten ist.

4. Trennvorrichtung (10) zum Trennen von Harn und Kot von Tieren, umfassend
eine Schiebevorrichtung (32) mit wenigstens einer Schaufel (34),
eine Antriebsvorrichtung (36) zum Antreiben der Schiebevorrichtung (32), und
eine Vibrationsvorrichtung (38) zum Vibrieren der Schaufel (34).

5. Trennvorrichtung (10) nach Anspruch 4,
**dadurch gekennzeichnet,**
**dass** eine Ladestation zum Laden eines Akkumulators der Vibrationsvorrichtung (38) vorgesehen ist.

6. Trennvorrichtung (10) nach Anspruch 4 oder 5,
**dadurch gekennzeichnet,**
**dass** die Schaufel (34) in einem oberen Bereich in Bewegungsrichtung (B) nach hinten versetzt ist.

7. Trennvorrichtung (10) nach einem der Ansprüche 4 bis 6,
**dadurch gekennzeichnet,**
**dass** zwei Schaufeln (34) vorgesehen sind, die insbesondere V-förmig angeordnet sind.

8. Trennvorrichtung (10) nach einem der Ansprüche 4 bis 7,
**dadurch gekennzeichnet,**
**dass** eine Stabilisierungseinheit (28), insbesondere mit einer Spülvorrichtung (30) und/oder einer Sprühvorrichtung (29), zum Einbringen einer Stabilisierungsflüssigkeit vorgesehen ist.

9. Verfahren zum Behandeln von Harn, vorzugsweise mit einem System nach einem der Ansprüche 1 bis 3, bei dem
Harn und Kot von Tieren getrennt werden, insbesondere mit einer Trennvorrichtung (10) nach einem der Ansprüche 4 bis 8,
der Harn stabilisiert wird, und
der Harn aufkonzentriert wird und/oder Düngersalze ausgefällt werden.

10. Verfahren nach Anspruch 9,
**dadurch gekennzeichnet,**
**dass** der Harn vor dem Aufkonzentrieren und/oder dem Ausfällen der Düngersalze destabilisiert wird.

11. Verfahren zum Behandeln von Harn, vorzugsweise mit einem System nach einem der Ansprüche 1 bis 3, bei dem
Harn und Kot von Tieren getrennt werden, insbesondere mit einer Trennvorrichtung (10) nach einem der Ansprüche 4 bis 8,
der Harn stabilisiert wird, und
der stabilisierte Harn, insbesondere mittels einer Stabilisierungseinheit (28), rückgeführt wird.
